# EUROPEAN PATENT APPLICATION

(11) **EP 4 819 568 A1**
(43) Date of publication of application: **07.10.2026**
(21) Application number: 25305488.6
(22) Date of filing: 02.04.2025
(51) Int. Cl.: H04L 45/24, H04L 45/243, H04L 47/283, H04L 47/34, H04L 47/36

(54) **OPTIMIZED LINK SCHEDULER**

(71) Applicant: Cysec SA, 1003 Lausanne (CH)
(72) Inventor: DI FEDE, Emmanuel, 1015 LAUSANNE (FR); ROELVINK, Yannick, 1015 LAUSANNE (NL)
(74) Representative: Plasseraud IP

(57) **Abstract**

A method of data transmission over a plurality of communication links, the method being performed by a scheduler and comprising:
receiving incoming data packets from a communication session and detecting a maximum segment size, MSS, of the received data packets;
storing the received data packets in a data table;
receiving operational information of each of the multiple communication links, the information comprising the link bandwidth and round-trip time, RTT;
constructing a data packet transfer series for each communication link based on the operational information, wherein each transfer series is defined by a starting packet index and
a sequence of indices corresponding to the data packets in the data table, and wherein the transfer series are calculated using the bandwidth and round-trip time differences between the communication links; and
transmitting the data packets from the data table to each of the plurality of communication links in the order defined by the indices specified in the transfer series for the respective communication link.

## Description

### Background

### Technical field

The present disclosure relates to network communication technologies, in particular to methods of transmitting and receiving data over multiple different communication links in an optimized manner. The disclosure also relates to an associated apparatus for performing the methods.

### Related art

Whenever a routing device is connected to multiple different communication links, it requires a way to distribute the incoming data packets over them. To achieve this, network schedulers (also known as queuing algorithms) have been designed and developed. Network schedulers have the aim of providing a logical basis on which a decision as to which communication link is used to transport a particular piece of data.

Some well-known examples of these scheduling schemes include the Round-Robin and FIFO scheduling algorithms. However, these existing network schedulers are designed to distribute data packets over communication links based on equal time allocation or prioritization of older data. While these scheduling schemes perform well in specific scenarios, they are not able to account for varying operational conditions of hybrid networking solutions, such as those combining both multi-orbit satellite and terrestrial communication links.

Current schedulers lack the capability to optimize data distribution by considering differences in bandwidth, latency, and packet loss across multiple links. Thus, there is a need to address these limitations.

A scheduler addressing these limitations can be used, for example, for applications that implement multi-WAN communication systems, such that described in European patent application number EP24201765.

### Summary

In a first aspect, there is provided a method of data transmission over a plurality of communication links, the method being performed by a scheduler and comprising:
receiving incoming data packets from a communication session and detecting a maximum segment size, MSS, of the received data packets;
storing the received data packets in a data table;
receiving operational information of each of the multiple communication links, the information comprising the link bandwidth and round-trip time, RTT;
constructing a data packet transfer series for each communication link based on the operational information, wherein each transfer series is defined by a starting packet index and a sequence of indices corresponding to the data packets in the data table, and wherein the transfer series are calculated using the bandwidth and round-trip time differences between the communication links; and
transmitting the data packets from the data table to each of the plurality of communication links in the order defined by the indices specified in the transfer series for the respective communication link.

Thus, advantageously, the claimed method can provide a means of optimizing the use of the plurality of communication links regardless of the latency and bandwidth of each link.

In some embodiments, the transfer series for each communication link is based on the relative throughput of the respective communication link compared to the relative throughputs of the other communication links.

In some embodiments the transfer series for each communication link is further based on obtaining a minimum product of the bandwidth and delay for each communication link.

In some embodiments, for L>1, each transfer series, S_{L}(n), is defined as: ${S}_{L} \left(n\right) = {I}_{L} + {\sum }_{i = 1 , i \neq L}^{N} \frac{{T}_{i}}{{T}_{L}} n$ where *I_{L}* is defined as: ${I}_{L} = {\sum }_{i = 1}^{L - 1} \frac{{RTT}_{L} - {RTT}_{i}}{2 MSS} {T}_{i}$ where, *S_{L}*(*n*) depicts the transfer series for a link *L, I_{L}* the starting index of the series of link *L, N* the total number of links within the system ordered by ascending round-trip time, *Tᵢ* the average throughput of a link *i* in bytes per second, *n* the integer value parameter of the series, *RTTᵢ* the average round-trip time of *link i* in seconds and *MSS* the Maximum Segment Size of the transferred data packet in bytes.

In some embodiments, for L=1, the transfer series is defined as the set of positive integer values that are not present in any of the other transfer series such that ${S}_{1} \left(n\right) = ℕ ∖ {∪}_{i = 2}^{N} {S}_{i} \left(n\right)$.

In some embodiments, the operational information is received either at predetermined intervals or in response to a change in the operational information in one or more of the communication links.

In some embodiments, moving averages of the elements of the operation information are used to calculate the transfer series.

In some embodiments, if two communication links have identical transfer series, then the value of I_{L} for one of the two series is incremented by 1.

In some embodiments, if two transfer series contain identical packet index values, then the value of I_{L} for one of the two series is incremented by 1.

In some embodiments, the terms in each transfer series are assigned an integer value that is the nearest integer value to the result of the calculation of the series.

In some embodiments, the method further comprises assigning an index to each incoming data packet and transmitting the packet index together with the data packet.

In some embodiments, each packet index is appended to its respective data packet as part of the carrier protocol packet header.

In a second aspect, there is provided a data scheduler apparatus comprising a memory and a processor, the memory being configured to store incoming data packets from a communication session in a data table, the processor being configured to:
detect a maximum segment size, MSS, of the received data packets;
receive operational information of each of the multiple communication links, the information comprising the link bandwidth and round-trip time, RTT;
construct a data packet transfer series for each communication link based on the operational information, wherein each transfer series is defined by a starting packet index and a sequence of indices corresponding to the data packets in the data table, and wherein the transfer series are calculated using the bandwidth and round-trip time differences between the communication links; and
transmit the data packets from the data table to each of the plurality of communication links in the order defined by the indices specified in the transfer series for the respective communication link.

In further aspects there is provided a computer program product comprising computer readable instructions which, when implemented on a processor perform all of the steps of the method of any of the first aspect, and a computer readable medium comprising such a computer program.

### Brief description of the drawings

The invention will now be described with reference to the accompanying Figures of which:
Figure 1 illustrates an example architecture of a data transmission system that distributes data packets across multiple communication links using a data scheduler according to an embodiment of the disclosure;
Figure 2 illustrates a transmission method according to an embodiment of the disclosure;
Figure 3 illustrates a reception method corresponding to the transmission method of figure 2; and
Figure 4 illustrates an example implementation of a method according to the disclosure.

### Detailed Description

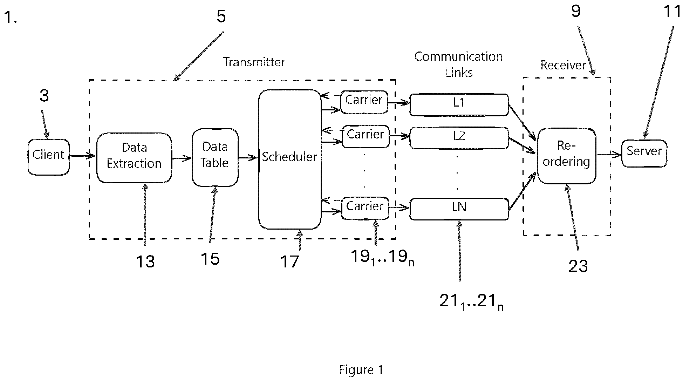

Figure 1 illustrates the architecture of a data transmission system 1 designed to optimise the distribution of data packets across multiple communication links. The system 1 is divided into three main sections: the transmitter 5, the communication links 21₁ to 21ₙ, and the receiver 9.

The system 1 allows a client device 3 to communicate with a server device 11. Although only a single communication direction is illustrated, the skilled person will recognise that the communication between the client 3 and the server 11 can be bi-directional, and that typically the reverse direction (not illustrated) will comprise the same elements as illustrated for the forward direction and use the same communication links 21₁ to 21ₙ.

The client 3 and server 11 devices can comprise any devices that can use wired or wireless communications to transmit and receive data, such as computers devices.

In use, the client device 3 transmits data to the transmitter 5. Such data can be transmitted via wired or wireless communication means and can be transmitted by any suitable transmission protocol, such as TCP, QUIC, UDP and any derivatives of such protocols. Moreover, the transmission data can comprise data from one or more sessions and different sessions can employ different transmission protocols. In embodiments, the transmitter 5 can be local to the client 3, and can form a part of the client 3. In further embodiments, the client 3 can be remote from the transmitter 5.

The transmitter 5 comprises a data extraction module 13, a data table 15, a scheduler 17 and a plurality of carrier modules 19₁..19ₙ. On receipt by the transmitter 5, the data extraction module 13 performs extraction of the data, this comprises extracting data from individual data packets and determining the Maximum Segment Size (MSS) of the received data. The MSS specifies the largest amount of payload data, for example specified in bytes, that is contained within a single segment.

Here, the term MSS is used. The skilled person will recognise that the term "Maximum segment size" is typically used in relation to a Layer 3 (transport layer) implementation. However, other terms can also be used, such as "maximum payload size" . The skilled person will recognise that, in the context of the invention, such terms can be used interchangeably to each describe the maximum size of payload data that is carried within a packet/segment etc and that this represents the maximum size of such a unit with any headers and footers removed. Moreover, the term "packet" can be used to replace "segment" in the context of the invention.

The MSS is generally a fixed parameter for a given carrier protocol and so may be determined once during initialisation of a link. However, in embodiments, changes to the MSS can be accommodated, either as signalled by a carrier protocol or upon receipt of incoming data.

The Extraction and determination of the MSS can be performed by known means. Some example implementations that can be used are as follows:
a. Network Analysis Tools: Known network analysis tools that allow packet inspection and payload data extraction can be used. Examples of such tools include tcpdump, tcpflow and Wireshark.
b. A Performance Enhancing Proxy (PEP): Generally, PEPs are used to enhance the performance of incoming TCP connections over high-latency links. They achieve this by splitting and locally terminating incoming TCP connections, after which the TCP payload data can be extracted and forwarded to a carrier system.

After extraction of the data and determination of the MSS, the extracted data are stored in a data table 15. The data table comprises a memory device that is configured to receive the payload data extracted from the incoming communication sessions by the data extraction module 13, and store them in an orderly fashion. Typically, the data table 15 will maintain a record of the original order of transmission of received data packets.

In embodiments, this record comprises storing the extracted data from each data packet in the memory In addition, the data table 15 is configured to add metadata to the extracted payload of each data packet. The added metadata includes information that describes the order of the extracted data within the data table 15.

The data from the data table 15 is then passed to the scheduler module 17. The scheduler is configured to forward the data from the received data packets to one of a plurality of communication links 21₁..21ₙ. In doing this, the scheduler 17 is configured to select a communication link for each piece of extracted data in a manner that optimises the usage of the combination of communication links. Further details of the optimisation process will be explained below.

The system 1 can implement any number of communication links between the transmitter 5 and the receiver 9, and imposes no limitations on the operational parameters (e.g. bandwidth, latency, packet loss, etc.) of any of them. This means that the system 1 is compatible with both multi-orbit (LEO, MEO & GEO) and terrestrial (5G, ADSL, Fiber) communication links, and any combination of these.

Each communication link 21₁..21ₙ has a respective carrier protocol module 19₁..19ₙ the carrier protocols modules 19₁..19ₙ can be configured to encapsulate data into any suitable carrier protocol, such as TCP, UDP or QUIC, for transmission via the carrier protocol's respective communication link.

The scheduler 17 does not impose any requirements on the selected carrier protocol, provided that it implements a method that allows the scheduler 17 to retrieve the operational parameters (e.g. latency, bandwidth, packet loss, etc.) of each of the communication links 21₁..21ₙ. In the example of TCP, this can be effected using an API between carrier protocol and the scheduler by known methods. However, depending on the requirements of the communication link, a reliable transmission protocol may need to be implemented, in order to manage re-transmissions in the case of packet loss. Thus, the carrier protocol used in a particular communication link can be changed or adapted to suit the prevailing conditions over that link.

Each data packet, including the added metadata, is then transmitted via its selected communication link 21₁..21ₙ. The data packets are then received at a receiver 9, which processes the received data using known methods. Additionally, the receiver 9 includes a reordering module 23. The reordering module 23 uses the metadata in each packet to check whether the order of packets is correct as defined by the metadata.

This step of checking whether re-ordering of packets is needed is required as, during transmission, some packets could have been lost. Whenever this is the case, if a reliable carrier protocol is implemented on the link in question, a re-transmission will be performed, ensuring that all the required data will arrive on the receiver side. The consequence of such a re-transmission, however, is that this will not necessarily happen in the original transmission order. As such, the reordering system is needed to ensure the individual data streams of packets arrive in order at the destination server 11.

The reordered data packets are then passed to the server 11.

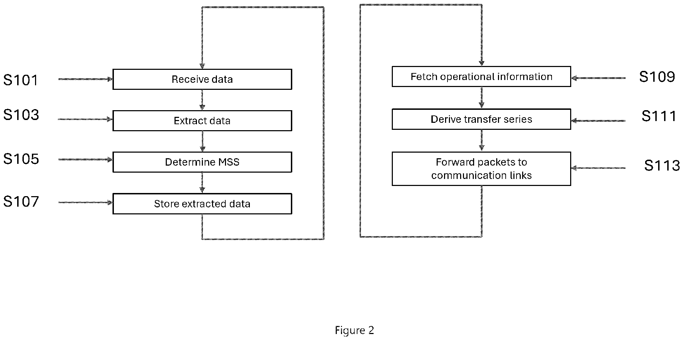

A method of transmission using the apparatus according to an embodiment of the disclosure will now be described in relation to figure 2.

As described above, data is received S101 at the transmitter 5 from the client 1. The data is then extracted S103 and the MSS within the received data is determined S105. The data is then stored S107 in the data table 15. Typically, the data is received at the transmitter 5 in a more-or-less continuous manner. As new data arrives it is added to the "back" of the data table 15 with higher index values in the metadata that previously-arrived data. Data also continuously leaves the "front" of the data table 15 as it is transmitted via the communication links 21₁..21ₙ. Thus, to prevent the metadata from having to indicate very large indices, the index value indicating the order of reception is configured to be cyclical so that it can wrap to a low value after a certain number of data segments/packets have been received.

Separately, the scheduler 17 repeatedly fetches S109 the operational information (e.g. bandwidth, delay, packet loss, etc.) provided by the individual carrier protocol modules 19₁..19ₙ of each of the links 21₁..21ₙ. In some embodiments, this is done in a continuous and regular manner in order to maintain the most current representation of the operational conditions of the links 19₁..19ₙ. For example, the fetching S109 can be carried out at regular time intervals. In some embodiments, the system 1 includes a shard memory that can be accessed by both the scheduler 17 sand each carrier protocol module 19₁..19ₙ. The carrier protocol modules 19₁..19ₙ are configured to update the operational information in the shared memory and this can be detected by the scheduler 17.

Next, the scheduler 17 derives S111 a set of data packet transfer series, one for each of the communication links. These series describe which packets stored within the data table module 15 will be forwarded to which communication link. The decision of which packets are forwarded to which link is based on the operational information obtained from the different carrier protocols. The output of these transfer series will be a set of indices, corresponding to individual packets within the data table 15.

A detailed description of the derivation of these transfer series will be provided below.

The scheduler 17 uses the indices provided by the different transfer series to determine to which communication link 21₁..21ₙ each extracted data packet should be forwarded S113.

In some embodiments, the processes of fetching S109, deriving the transfer series S111 and forwarding packets S113 are carried out independently of the steps of receiving S101, extracting S103 determining the MSS S105 and storing S107. Thus, in such embodiments, there need be no fixed order between the two sets of steps.

In embodiments, the scheduler 17 does not impose any criteria as to which data is forwarded to which link. Rather, it simply arranges the extracted data to fit with the operational conditions of each of the links.

When distributed, the data packets will be forwarded S113 to the particular carrier protocol module 19₁..19ₙ that is associated with the selected communication link. There, the data packets will be encapsulated into a pre-defined carrier protocol (e.g. UDP, TCP, QUIC, etc.), which will transport the packets over the communication link. The scheduler 17 does not impose any requirements to the selected carrier protocol, provided that it implements a method that allows the scheduler to retrieve the operational parameters (e.g. latency, bandwidth, packet loss, etc.) of the communication links. Depending on the requirements of the communication link, a reliable transmission protocol will need to be implemented, in order to manage re-transmissions in the case of packet loss.

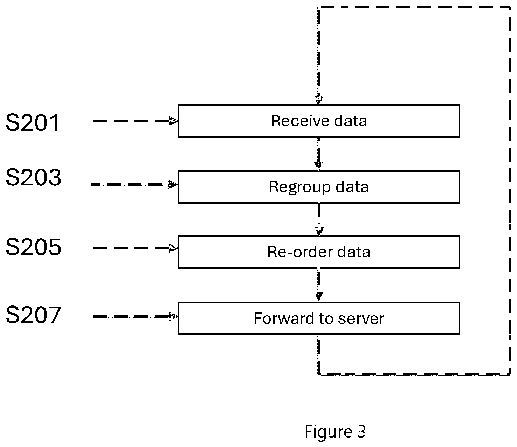

A method of receiving data at the receiver 9 will now be described in relation to figure 3.

On the receiver side of the system, all the data packets received S201 from the different communication links are collected and re-grouped S203. Whenever required, the packets are re-ordered S205 into their required transmission sequence, leveraging the original transmission order meta-data added by the Data Table module, before being forwarded S207 to the final destination server 11. This step of checking whether re-ordering of packets is needed is required, as during transmission, some packets could have been lost. Whenever this is the case, if a reliable carrier protocol is implemented on the link in question, a re-transmission will be performed, ensuring that all the required data will arrive on the receiver side. The consequence of such a re-transmission, however, is that this will not necessarily happen in the original transmission order. As such, the reordering system is needed to ensure the individual data streams of packets do arrive in order at the destination server 11.

A method of deriving the data packet transfer series will now be described.

In order to decide which data packet needs to be transferred at which moment to achieve an optimized transmission, the scheduler 17 defines a transfer series for each of the communication links 21₁..21ₙ. This is achieved by using the relative bandwidth, as defined in the equations below, and the difference in latency between the different links, as illustrated in the equation below. Here, the latency is defined as the round trip time, RTT.

Each transfer series, S_{L}(n) is defined as follows: ${S}_{L} \left(n\right) = {I}_{L} + {\sum }_{i = i , i \neq L}^{N} \frac{{T}_{i}}{{T}_{L}} n$ **where** *I_{L}* is defined as: ${I}_{L} = {\sum }_{i = 1}^{L - 1} \frac{{RTT}_{L} - {RTT}_{i}}{2 MSS} {T}_{i}$

The equations defined above are in general only be applied for *L* > 1, as a special case is made for *S*₁(*n*), which is the transfer series for the link with the lowest latency.

S₁(n) is defined as the set of positive integer values that are not present in any of the other transfer series. This means that all the data packets that are not allocated to a specific link will be forwarded over the lowest-latency link.

A mathematical definition of this property is provided below: ${S}_{1} \left(n\right) = {ℕ}^{+} ∖ {∪}_{i = 2}^{N} {S}_{i} \left(n\right)$

Where ${ℕ}^{+}$ is the set of all natural integers greater than zero and U is the union denoting the combination of all existing Sᵢ series

Thus, from the above, the relative bandwidth can be thought of as the summation of the ratios of the throughputs of all links except the link for which the series is being computed divided by the throughput of the link in question.

Within all of the equations above, *S_{L}*(*n*) depicts the transfer series for a link *L, I_{L}* the starting index of the series of a link *L, N* the total number of links within the system (ordered by ascending round-trip time), *Tᵢ* the throughput of a *link i* (for example in bytes per second), *n* the integer value parameter of the series, *RTTᵢ* the round-trip time of *link i* (in seconds) and *MSS* the Maximum Segment Size of the transferred data packet (in bytes).

The series *S_{L}*(*n*) will typically be unique for each link and they produce a set of indices, which dictate which individual packets are transferred from the data table 5 to the associated link.

In some embodiments, average values of the throughput and bandwidth of the link over a time period are computed. However, considering that both of these parameters can fluctuate significantly during the usage of a communication link, in further embodiments, a moving average implementation is used. The skilled person will recognise how to calculate moving averages of the throughput and bandwidth/relative bandwidth, thus further explanation will not be provided. The calculations of the moving averages can be carried out either by the individual carrier protocol modules 19₁..19ₙ, or by the scheduler 17 or by an external entity.

The transfer series do not indicate when a specific packet is forwarded over a link, but rather in which order. This means that for a set of transfer series, all links will receive packets at the same time, with the difference being the packets' relative position within the order of received data packets.

In addition, as described in relation to figure 3, the series can be regularly updated by repeatedly performing steps S109 and S111. This repeated update can permit the described method to follow fluctuations of the throughput and latency of the connected links as closely as possible.

Due to the fact that *S_{L}*(*n*) describes a series of indices, which are inherently integer values, the values of *I_{L}* and the fraction *Tᵢ* / *T_{L}* are also required to be integers. In some embodiments, if the calculations provided above result in non/integer value for any of these two parameters for a specific link, the nearest integer value can be taken instead.

In theory, two links with exactly the same values for their available throughput and latency will have identical transfer series. However, in practice these values will very rarely be exactly similar since fluctuations in both parameters occur naturally due to external factors. Nevertheless, due to the fact that *S_{L}*(*n*) necessarily outputs an integer value, overlapping values due to the rounding of *I_{L}* and *Tᵢ* / *T_{L}* can still occur.

To resolve the ambiguity resulting from an overlapping or identical series, in some embodiments, the scheduler 17 is configured to increment the value of *I_{L}* by 1 in one of the series that is determined to be identical to another series. The selection of which series to adjust can, for example, be made at random or by selecting the series related to the link with the lower or high latency. By doing this, the two identical or overlapping series can be offset from each other so as to resolve any overlapping.

Similarly, the values of any two transfer series within a system can overlap somewhere along their sets of numbers. This is due to the fact that, in theory, some value combinations of *I_{L}* and *Tᵢ* / *T_{L}* will cause two series to intersect and produce the same integer value. However, for the same reason as mentioned prior, in practice these values will very rarely be exactly similar, as fluctuations in both parameters occur naturally due to external factors.

Nevertheless, in some embodiments if any intersections are detected, the scheduler will increment the value of *I_{L}* by 1 in one of the series that is detected to intersect in order to resolve this. Again, the selection of which series to adjust can, for example, be made at random or by selecting the series related to the link with the lower or high latency.

The optimization process described above can be classified into two main categories:
- Delay-based Initialization: In order to have the fastest initialization of the multi-link communication system, the scheduler starts off by prioritizing low-latency links over their high-latency counterparts, in order to get as much data in-transit as soon as possible. This is reflected in the definition of a series' starting index (*I_{L}*) provided above, which utilizes the difference in bandwidth between each of the connected links to determine their initialization order.
- BDP-based Data Transmission: After the initialization process, the scheduler no longer prioritizes based on the latency of a communication link. Instead, it follows the relative throughput values of each of the links, aiming to keep all the connected links filled up. In this context, a "full" link has an amount of data that is in-transit that is equal to its operational Bandwidth-Delay-Product (BDP). The throughput is defined as the actual speed achieved as opposed to the bandwidth, which is typically the theoretical maximum capacity. However, for the purposes of this disclosure, these terms are used interchangeably. Using this approach, the scheduler 17 is able to maximize the amount of data that is in-transit at any point in time, minimizing the time the receiver 9 will lose on waiting for incoming data.

Thus, whilst the optimisation process of the invention has been described using the equations as defined above, the skilled person will recognise that variations on the process defined by the equations can equally be used. Thus, the invention includes any first process that uses a first stage that is configured to optimise initialisation of a set of links by prioritising low-latency links over higher-latency links for transmission of data during the initialisation of such links. The invention also includes any second process that acts to maintain links in a state that maximises the amount of data that is in-transit. Moreover, the invention includes any combination of such first and second processes.

The described system and methods provide a means to optimize data distribution across multiple communication links with varying bandwidths and latencies, a capability not addressed by existing network schedulers. This system introduces a packet scheduler 17 that creates individualized packet transfer series for each communication session, taking into account the relative bandwidth and round-trip time differences of the links. This approach minimizes waiting times and data reordering at the receiving end, while fully utilizing the available bandwidth of all communication channels. The integration of a Performance Enhancing Proxy (PEP) allows the scheduler to operate independently of communication protocols, enhancing versatility. Furthermore, the system is compatible with both satellite-based and terrestrial communication links, making it particularly suited for hybrid multi-WAN systems. This combination of hybrid communication compatibility and operational condition optimization distinguishes the system from existing solutions.

The described system provides benefits in both the interoperability and performance of a system using multiple communication links. The described system provides a network traffic scheduler that is compatible with any type of connected link, either satellite-based (LEO, MEO and/or GEO) or terrestrial-based (e.g. ADSL, 5G, Fiber, etc.). Moreover, by implementing the described system, multi-link communication systems are able to maximize the amount of transmitted data and minimize the impact of packet switching and/or reordering.

The described system is compatible with many types of connected communication links. Systems that implement multi-link and/or hybrid communication will specifically be able to benefit from its added benefits.

There now follows an example implementation of the described system. In this example, it is assumed that the following multi-link configuration is to be used:

| **Link (L)** | **Latency (RTT)** | **Bandwidth (T)** | **BDP (RTT x T)** |
|---|---|---|---|
| **1** | 50 ms | 45 MBps | 2.25 MB |
| **2** | 100 ms | 10 MBps | 1.0 MB |
| **3** | 200 ms | 4 MBps | 0.8 MB |

In the above table, the Bandwidth delay product, BDP is calculated by multiplying the Latency (i.e. the delay) by the bandwidth.

In this example, it is assumed that a maximum data packet size (the MSS as defined earlier) is 1500 bytes. In the table above, the links have already been ordered in ascending order of latency, as used in the above-described calculation of*S_{L}*(*n*).

### Link 3

Starting with link 3, we have the following definition of *S*₃(*n*): ${S}_{3} \left(n\right) = {I}_{3} + {\sum }_{i = 1 , i \neq 3}^{3} \frac{{T}_{i}}{{T}_{3}} n and {I}_{3} = {\sum }_{i = 1}^{2} \frac{{RTT}_{3} - {RTT}_{i}}{2 ⋅ MSS} {T}_{i}$

Filling in the values defined in the table above, we get the following computation of *I*₃: $\begin{matrix}{I}_{3} = {\sum }_{i = 1}^{2} \frac{{RTT}_{3} - {RTT}_{i}}{2 ⋅ MSS} {T}_{i} = \frac{{RTT}_{3} - {RTT}_{1}}{2 ⋅ 1500} {T}_{1} + \frac{{RTT}_{3} - {RTT}_{2}}{2 ⋅ 1500} {T}_{2} \\ = \frac{200 ⋅ {10}^{- 4} - 50 ⋅ {10}^{- 4}}{2 ⋅ 1500} \times 45 ⋅ {10}^{6} + \frac{200 ⋅ {10}^{- 4} - 100 ⋅ {10}^{- 4}}{2 ⋅ 1500} \times 10 ⋅ {10}^{6} \\ = 1583 . \overline{3} \approx 2583\end{matrix}$

As shown above, the computation of *I*₃ returned a decimal number. As previously described, this is rounded down to the nearest integer value.

Next, inputting this value back into the definition of *S*₃(*n*) gives: $\begin{matrix}{S}_{3} \left(n\right) = {I}_{3} + {\sum }_{i = 1 , i \neq 3}^{3} \frac{{T}_{i}}{{T}_{3}} n = {I}_{3} + \left(\frac{{T}_{1}}{{T}_{3}}+\frac{{T}_{2}}{{T}_{3}}\right) n \\ = 2583 + \left(\frac{45 ⋅ {10}^{6}}{4 ⋅ {10}^{6}}+\frac{10 ⋅ {10}^{6}}{4 ⋅ {10}^{6}}\right) n \\ = 2583 + 13.75 n \approx 2583 + 14 n\end{matrix}$

Again, since the computation produced a decimal number, this has been rounded up to the nearest integer value.

Therefore, we find the transfer series of link 3 is derived as: ${S}_{3} \left(n\right) = 2583 + 14 n$

### Link 2

Next, the same computations can be performed for link 2: ${S}_{2} \left(n\right) = {I}_{2} + {\sum }_{i = 1 , i \neq 2}^{3} \frac{{T}_{i}}{{T}_{2}} n and {I}_{2} = \frac{{RTT}_{2} - {RTT}_{1}}{2 ⋅ MSS} {T}_{1}$

Filling in the values defined in the table above, we get the following computation of *I*₂: $\begin{matrix}{I}_{2} = \frac{{RTT}_{2} - {RTT}_{1}}{2 ⋅ MSS} {T}_{1} = \frac{100 ⋅ {10}^{- 4} - 50 ⋅ {10}^{- 4}}{2 ⋅ 1500} \times 45 ⋅ {10}^{6} \\ = 750\end{matrix}$

When we again insert this value into the definition of *S*₂(*n*), we get; $\begin{matrix}{S}_{2} \left(n\right) = {I}_{2} + {\sum }_{i = 1 , i \neq 2}^{3} \frac{{T}_{i}}{{T}_{2}} n = {I}_{2} + \left(\frac{{T}_{1}}{{T}_{2}}+\frac{{T}_{3}}{{T}_{2}}\right) n \\ = 750 + \left(\frac{45 ⋅ {10}^{6}}{10 ⋅ {10}^{6}}+\frac{4 ⋅ {10}^{6}}{10 ⋅ {10}^{6}}\right) n \\ = 750 + 4.9 n \approx 750 + 5 n\end{matrix}$

Which results in the transfer series of link 2 as: ${S}_{2} \left(n\right) = 750 + 5 n$

### Link 1

Finally, we get to the definition of Link 1, which is the lowest-latency link of the implementation. As described above *S*₁(*n*) is defined as: ${S}_{1} \left(n\right) = ℕ \ {∪}_{i = 2}^{N} {S}_{i} \left(n\right) = ℕ \ \left({S}_{2}\left(n\right)/U {S}_{3}\left(n\right)\right)$

Therefore, all packet indices that are not part of S₂(n) or S₃(n) are assigned to S₁(n).

Using the definitions of the three transfer series provided above, the scheduler 17 can start to forward the first packet found in the Data Table to Link 1, the 750^{th} to Link 2 and the 2583^{rd} to Link 3 during its first transmission cycle.

During the next cycle, the second packet will be forwarded to Link 1, the 755^{th} to Link 2 and the 2597^{th} to Link 3. This will continue for as long as new data packets arrive from the client's connection.

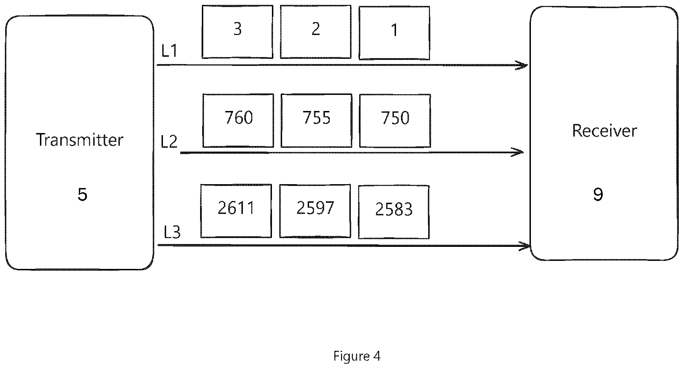

The transfer order over each of the three links of the example is illustrated in figure 4. In figure 4, the transmitter 5 and receiver 9 are connected via the three links, labelled L1, L2 and L3. As illustrated, the first packet, packet 1, is transmitted via link L1, the 750^{th} via link L2 and the 2583^{rd} via L3. Subsequently, the , during the next cycle, the second packet will be forwarded to Link 1, the 755^{th} to Link 2 and the 2597^{th} to Link 3. This will continue for as long as new data packets arrive from the client's connection.

The skilled person will recognize that there is a difference in throughput and latency between the different links, as specified in the Table above. As a result, although packets 1, 750 and 2583 are forwarded simultaneously over L1, L2 and L3, respectively, this does not necessarily result in similar arrival times at the receiver. This gives rise to the need for the reordering process described above.

As mentioned above, embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method of data transmission over a plurality of communication links, the method being performed by a scheduler and comprising:
receiving incoming data packets from a communication session and detecting a maximum segment size, MSS, of the received data packets;
storing the received data packets in a data table;
receiving operational information of each of the multiple communication links, the information comprising the link bandwidth and round-trip time, RTT;
constructing a data packet transfer series for each communication link based on the operational information, wherein each transfer series is defined by a starting packet index and a sequence of indices corresponding to the data packets in the data table, and wherein the transfer series are calculated using the bandwidth and round-trip time differences between the communication links; and
transmitting the data packets from the data table to each of the plurality of communication links in the order defined by the indices specified in the transfer series for the respective communication link.

2. The method of claim 1, wherein the transfer series for each communication link is based on the relative throughput of the respective communication link compared to the relative throughputs of the other communication links.

3. The method of claim 2, wherein the transfer series for each communication link is further based on obtaining a minimum product of the bandwidth and delay for each communication link.

4. The method of any preceding claim, wherein, for L>1, each transfer series, S_{L}(n), is defined as: ${S}_{L} \left(n\right) = {I}_{L} + {\sum }_{i = 1 , i \neq L}^{N} \frac{{T}_{i}}{{T}_{L}} n$ where *I_{L}* is defined as: ${I}_{L} = {\sum }_{i = 1}^{L - 1} \frac{{RTT}_{L} - {RTT}_{i}}{2 MSS} {T}_{i}$ where, *S_{L}*(*n*) depicts the transfer series for a link *L, I_{L}* the starting index of the series of link *L, N* the total number of links within the system ordered by ascending round-trip time, *Tᵢ* the average throughput of a link *i* in bytes per second, *n* the integer value parameter of the series, *RTTᵢ* the average round-trip time of *link i* in seconds and *MSS* the Maximum Segment Size of the transferred data packet in bytes.

5. The method of claim 4, wherein for L=1, the transfer series is defined as the set of positive integer values that are not present in any of the other transfer series such that ${S}_{1} \left(n\right) = ℕ + \ {∪}_{i = 2}^{N} {S}_{i} \left(n\right)$.

6. The method of any preceding claim, wherein the operational information is received either at predetermined intervals or in response to a change in the operational information in one or more of the communication links.

7. The method of claim 6, wherein moving averages of the elements of the operation information are used to calculate the transfer series.

8. The method of claim 4, wherein, if two communication links have identical transfer series, then the value of I_{L} for one of the two series is incremented by 1.

9. The method of claim 4, wherein, if two transfer series contain identical packet index values, then the value of I_{L} for one of the two series is incremented by 1.

10. The method of claim 4, wherein the terms in each transfer series are assigned an integer value that is the nearest integer value to the result of the calculation of the series.

11. The method of any preceding claim, further comprising assigning an index to each incoming data packet and transmitting the packet index together with the data packet.

12. The method of claim 10, wherein each packet index is appended to its respective data packet as part of the carrier protocol packet header.

13. A data scheduler apparatus comprising a memory and a processor, the memory being configured to store incoming data packets from a communication session in a data table, the processor being configured to:
detect a maximum segment size, MSS, of the received data packets;
receive operational information of each of the multiple communication links, the information comprising the link bandwidth and round-trip time, RTT;
construct a data packet transfer series for each communication link based on the operational information, wherein each transfer series is defined by a starting packet index and a sequence of indices corresponding to the data packets in the data table, and wherein the transfer series are calculated using the bandwidth and round-trip time differences between the communication links; and
transmit the data packets from the data table to each of the plurality of communication links in the order defined by the indices specified in the transfer series for the respective communication link.

14. A computer program product comprising computer readable instructions which, when implemented on a system comprising a processor, performs all of the steps of the method of any of claims 1-12.

15. A computer readable medium comprising the computer program of claim 14.
